# EUROPÄISCHE PATENTANMELDUNG

(11) **EP 2 062 689 A1**
(43) Veröffentlichungstag der Anmeldung: **27.05.2009**
(21) Anmeldenummer: 07022673.3
(22) Anmeldetag: 22.11.2007
(51) Int. Cl.: B25B 5/14, B29C 65/78, E21B 19/16, F16L 1/09

(54) **Rohrverbindungsvorrichtung**

(71) Anmelder: Karl Hamacher Vertriebs GmbH, 44807 Bochum (DE)
(72) Erfinder: Füsser, Bernd, 45219 Essen (DE); Rademacher, Marco, 44807 Bochum (DE)
(74) Vertreter: Nunnenkamp, Jörg

(57) **Zusammenfassung**

Gegenstand der vorliegenden Erfindung ist eine Rohrverbindungsvorrichtung, welche zur Kopplung/Entkopplung von insbesondere Hochdruckrohren zur Fluidführung geeignet ist. Zum grundsätzlichen Aufbau gehören wenigstens zwei zueinander bewegbare Klemmwerkzeuge (3). Erfindungsgemäß ist das jeweilige Klemmwerkzeug (3) mit zwei Klemmbolzen (4) ausgerüstet, welche einen Rohrabschnitt (1) unter Keilwirkung zwischen sich aufnehmen.

## Beschreibung

Die Erfindung betrifft eine Rohrverbindungsvorrichtung zur Kopplung/Entkopplung von insbesondere Hochdruckrohren zur Fluidführung, mit wenigstens zwei zueinander bewegbaren Klemmwerkzeugen.

Eine solche Rohrverbindungsvorrichtung wird beispielhaft in der DE 699 11 809 T2 vorgestellt. Hier geht es um die Verbindung von Rohrabschnitten unter Verwendung eines Aufsatzantriebes. Zu diesem Zweck sind eine äußere Klemmeinrichtung zum Eingriff mit dem Rohrabschnitt und zusätzlich ein inneres Klemmwerkzeug zum Eingriff in den Rohrabschnitt realisiert.

Beide beschriebenen Klemmwerkzeuge werden im Verhältnis zueinander mit Hilfe eines Antriebes bewegt. - Abgesehen davon, dass die beschriebene Vorrichtung relativ kompliziert aufgebaut ist, eignet sie sich nicht oder kaum zur Verbindung von Hochdruckrohren, die üblicherweise mit einer Steckmuffe ausgerüstet sind, welche in den korrespondierenden Rohrabschnitt zur Verbindung eintaucht. Ein Beispiel für ein solches Hochdruckrohr wird in der DE 100 23 890 C2 beschrieben. Daneben existieren natürlich zahlreiche Beispiele aus der Praxis.

Die DE 691 28 099 T2 beschäftigt sich mit einem Rohrverbindungsaufbau, bei welchem ein Rohrabschnitt von einer Hülse umgeben ist. Hier wird also mit einer den Rohrabschnitt umschließenden Hülse gearbeitet, was insbesondere dann nachteilig ist, wenn die einzelnen Rohre bzw. Rohrabschnitte in Längsrichtung bewegt werden sollen bzw. nur begrenzter Einbauraum zur Verfügung steht. Denn bei solchen Rohren versucht man, möglichst auf abstehende Muffen, Hülsen, Schalen oder dergleichen zu verzichten.

Im untertägigen Strebausbau werden oftmals große Fluidmengen für einen fortschreitenden Abbauschild benötigt. Zugleich steht nur begrenzter Bauraum zur Verfügung. Um nun beispielsweise ein Rohr in einer zugehörigen Hochdruckrohrleitung zu ersetzen und/oder eine Dichtung auszuwechseln, war es bisher erforderlich, mit Pressen, Zügen etc. die einzelnen Rohrabschnitte voneinander zu trennen. Das erfordert oftmals ernorme Bedienkräfte, weil die Leitungen jeweils mehrere 100 Meter lang sein können. Hierfür sind bis jetzt keine überzeugenden Lösungen vorgeschlagen worden. Deshalb will die Erfindung Abhilfe schaffen.

Der Erfindung liegt das technische Problem zugrunde, eine derartige Rohrverbindungsvorrichtung zur Kopplung von insbesondere Hochdruckrohren zur Fluidführung so weiter zu entwickeln, dass die einzelnen Rohrabschnitte auch bei begrenztem Einbauraum einwandfrei und mit möglichst geringem Aufwand voneinander getrennt werden können.

Zur Lösung dieser technischen Problemstellung ist bei einer gattungsgemäßen Rohrverbindungsvorrichtung vorgesehen, dass das jeweilige Klemmwerkzeug mit zwei Klemmbolzen ausgerüstet ist, welche einen Rohrabschnitt unter Keilwirkung zwischen sich aufnehmen.

Das heißt, die beiden zu verbindenden Rohrabschnitte weisen jeweils ein Klemmwerkzeug auf, das seinerseits mit zwei Klemmbolzen ausgerüstet ist, die sich unter Keilwirkung an den zugehörigen Rohrabschnitt anlegen, um so die erforderlichen Axialkräfte auf den Rohrabschnitt ausüben zu können. Dabei ist die Erfindung selbstverständlich nicht auf Hochdruckrohre beschränkt, sondern kann selbstverständlich bei Rohren allgemeiner Ausgestaltung zum Einsatz kommen. Außerdem schließt die Erfindung Varianten ein, bei welchen Rohrabschnitte endseitig von Schlauchleitungen vorgesehen sind und mit Hilfe der beschriebenen Rohrverbindungsvorrichtung gekoppelt und selbstverständlich auch entkoppelt werden können. Das heißt, die Rohrverbindungsvorrichtung dient sowohl zur Verbindung der fraglichen Rohrenden bzw. Rohrabschnitte als auch dazu, die Rohrabschnitte im Bereich einer Rohrverbindungsebene voneinander zu trennen.

Nach vorteilhafter Ausgestaltung ist das Klemmwerkzeug insgesamt zerlegbar ausgebildet und lässt sich an den zugehörigen Rohrabschnitt anbauen. Das kann unmittelbar vor Ort, das heißt am Ort der Rohrleitung geschehen. Tatsächlich sind die Klemmbolzen in der Regel durch beidseitige Tragarme miteinander verbunden. Um die beschriebene Zerlegbarkeit zu erreichen, werden die Klemmbolzen allgemein lösbar an den jeweiligen Tragarmen festgelegt. Dadurch können die beiden Klemmbolzen und die Tragarme unschwer um den jeweiligen Rohrabschnitt gelegt werden.

Um nun die gewünschten Axialkräfte auf den Rohrabschnitt unter gleichzeitiger Keilwirkung ausüben zu können, werden die Klemmbolzen gegenüber der bereits angesprochenen Rohrverbindungsebene schräg gestellt. Dabei werden im Wesentlichen zwei verschiedene Schrägwinkel eingestellt, je nach dem, ob drückende Axialkräfte zur Verbindung der Rohrabschnitte ausgeübt werden sollen oder ziehende Axialkräfte, damit die Rohrabschnitte voneinander gelöst werden.

Die Klemmbolzen formen zusammen mit den Tragarmen vorteilhaft einen den Rohrabschnitt umschließenden Klemmkäfig. Dieser Klemmkäfig lässt sich wie das Klemmwerkzeug im Ganzen zerlegen und direkt an dem gewünschten Rohrabschnitt anbauen. In diesem Zusammenhang hat es sich weiter als günstig erwiesen, wenn der jeweilige Klemmbolzen eine an die Kontur des Rohrabschnittes angepassten Klemmbereich aufweist. Üblicherweise verfügt der Klemmbereich über eine Oberfläche mit hohem Reibwiderstand, mag beispielsweise an dieser Stelle aufgeraut sein. Dabei hat es sich besonders bewährt, wenn der Klemmbereich insgesamt doppelkegelstumpfförmig ausgestaltet ist.

Tatsächlich trägt die Doppelkegelstumpfform im Klemmbereich der Tatsache Rechnung, dass die Rohre in der Regel über einen kreiszylindrischen Querschnitt verfügen. Infolge der Doppelkegelstumpfform des Klemmbereiches ist dieser besonders gut an die Kontur des Rohres angepasst. Tatsächlich bilden sich in der Regel jeweils zwei sich gegenüber liegende Anlageflächen an jedem Kegel des Doppelkegelstumpfes aus. Dadurch wird die Keilwirkung unterstützt.

Zur Verstellung der beiden Klemmwerkzeuge zueinander ist im Allgemeinen eine Antriebseinheit vorgesehen. Um die Antriebseinheit von den örtlichen Gegebenheiten möglichst unabhängig zu gestalten, schlägt die Erfindung vor, dass die Antriebseinheit mechanisch und/oder elektrisch und/oder hydraulisch arbeitet. In der Regel greift die Antriebseinheit an den bereits angesprochenen Tragarmen des Klemmkäfigs ein und verbindet diese miteinander. Meistens sind zu diesem Zweck zusätzliche Verbindungsbolzen an den Tragarmen realisiert. Das heißt, die beiden Tragarme je Klemmwerkzeug werden einerseits durch die beiden Klemmbolzen und andererseits durch den die Tragarme koppelnden Verbindungsbolzen miteinander verbunden. Die Antriebseinheit arbeitet nun auf die die beiden Tragarme jeweils miteinander koppelnden Verbindungsbolzen.

Das kann im einfachsten Fall so geschehen, dass die Verbindungsbolzen jeweils mit einem Innengewinde ausgerüstet sind und die Antriebseinheit auf eine Gewindestange dergestalt arbeitet, dass zum miteinander Verbinden der Rohrabschnitte die beiden Verbindungsbolzen mit Hilfe der Antriebseinheit in ihrem Abstand zueinander verringert werden, wohingegen der Trennvorgang und das Auseinanderziehen der Rohrabschnitte dazu korrespondiert, dass der Abstand zwischen den Verbindungsbolzen vergrößert wird.

Im Ergebnis wird eine Rohrverbindungsvorrichtung zur Verfügung gestellt, die einfach aufgebaut ist und eine problemlose und funktionale Kopplung und Entkopplung von Rohrabschnitten ermöglicht. Dabei ist es insbesondere nicht erforderlich, an dem jeweiligen Rohrabschnitt einen Flansch oder ein vergleichbares Befestigungsmittel anzubringen oder vorzusehen, welches von der erfindungsgemäßen Rohrverbindungsvorrichtung hintergriffen oder als Anschlag genutzt wird. Vielmehr ist die Rohrverbindungsvorrichtung in der Lage, mit ihren beiden speziellen und als Klemmkäfig ausgebildeten Klemmwerkzeugen die jeweilige Außenoberfläche des zugehörigen Rohrabschnittes unter Keilwirkung der Klemmbolzen zu ergreifen und zu fixieren und hierdurch die Rohrabschnitte aufeinander zuzubewegen oder voneinander zu trennen.

Das stellt sich insbesondere bei der Kopplung von Hochdruckrohren als günstig dar, bei denen äußere Befestigungseinrichtungen, beispielsweise Flansche etc. fehlen. Solche Hochdruckrohre mögen über eine oder mehrere Steckmuffen verfügen, die in den jeweils anderen Rohrabschnitt hineinragen und mittels eines Keilmittels, beispielsweise einer Keilkette, miteinander verbunden werden. Solche Rohre bzw. Hochdruckrohre werden beispielhaft in der DE 10 2005 001 993 A1 beschrieben.

Jedenfalls ermöglicht die erfindungsgemäße Rohrverbindungsvorrichtung die Kopplung und Entkopplung praktisch beliebig gestalteter Rohre, weil die speziell ausgestalteten Klemmwerkzeuge jeweils an der Außenoberfläche der Rohrabschnitte angreifen. Dabei gelingt die Kopplung/Entkopplung einfach, und zwar sogar rein auf mechanischem Wege, indem die jeweiligen Klemmkäfige schräg zur Rohrverbindungsebene gestellt werden und infolge der von den Klemmbolzen unter Keilwirkung ausgeübten Axialkräfte die gewünschten Bewegungen vollführen. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: die erfindungsgemäße Rohrverbindungsvorrichtung beim Auseinanderziehen von zwei Rohrabschnitten und
- **Fig. 2**: die Rohrverbindungsvorrichtung beim Zusammendrücken der betreffenden Rohrabschnitte.

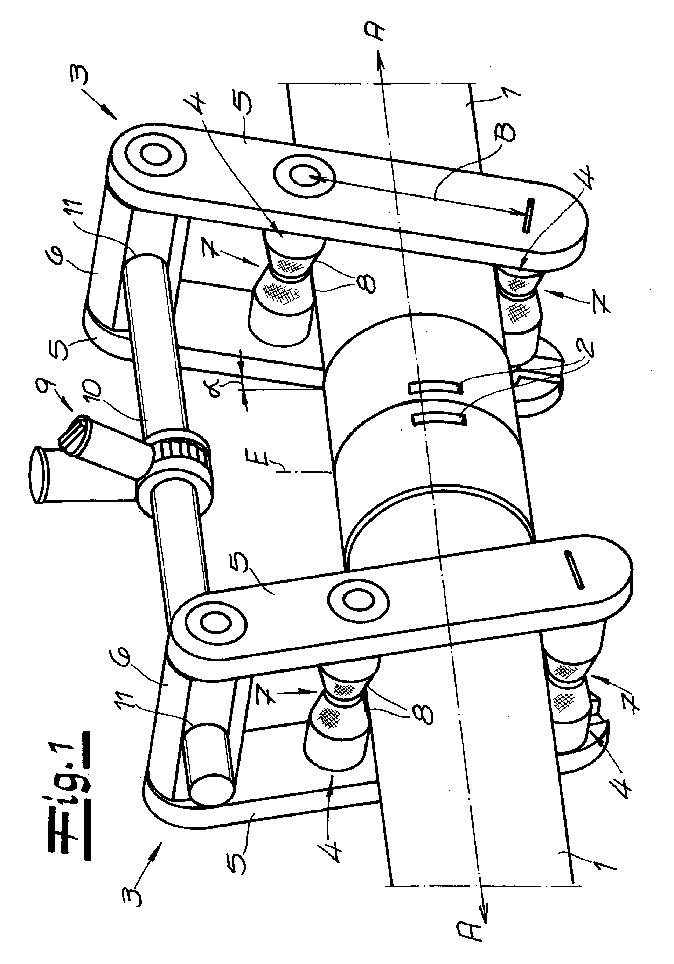

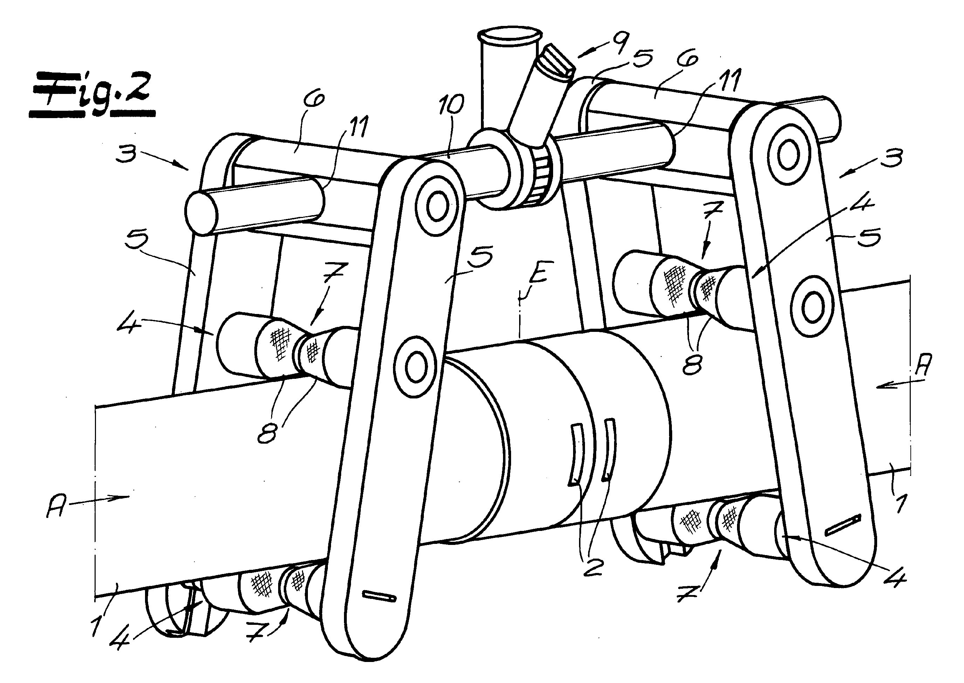

In den Figuren ist eine Rohrverbindungsvorrichtung dargestellt, die im Rahmen des Beispiels und nicht einschränkend dazu genutzt wird, zwei Rohrabschnitte 1 miteinander zu koppeln (vgl. Fig. 2) bzw. voneinander zu trennen (Fig. 1). Die beiden Rohrabschnitte 1 stoßen stumpf entlang einer Rohrverbindungsebene E aneinander. Zur Verbindung der beiden Rohrabschnitte 1 verfügen diese über eine im Innern der Rohrabschnitte 1 vorhandene Kupplungsmuffe, welche mit Hilfe zugehöriger Keilmittel an dem jeweiligen Rohrabschnitt 1 festgelegt wird. Die angesprochenen Keilmittel werden über zwei in den Figuren angedeutete Öffnungen 2 eingeführt und sorgen dafür, dass die beiden Rohrabschnitte 1 in Verbindung mit der Kupplungsmuffe im Innern miteinander gekoppelt sind.

Um nun beispielsweise eine im Innern des jeweiligen Rohrabschnittes 1 defekte Dichtung auszutauschen, ist es erforderlich, die jeweiligen Rohrabschnitte 1 voneinander zu trennen. Das geschieht mit Hilfe der nachfolgend noch zu beschreibenden Rohrverbindungsvorrichtung und der Funktionsstellung nach Fig. 1 folgend. Tatsächlich verfügt die Rohrverbindungsvorrichtung über wenigstens zwei zueinander bewegbare Klemmwerkzeuge 3, die im Wesentlichen gleich aufgebaut sind. Jedes Klemmwerkzeug 3 gehört zu einem Rohrabschnitt 1. Beide Klemmwerkzeuge 3 liegen sich in Bezug auf eine demgegenüber mittige Rohrverbindungsebene E gegenüber. Das gilt auch für die Rohrabschnitte 1.

Das jeweilige Klemmwerkzeug 3 ist mit zwei Klemmbolzen 4 ausgerüstet, welche den Rohrabschnitt 1 unter Keilwirkung zwischen sich aufnehmen. Tatsächlich wird diese Keilwirkung zwischen den beiden Klemmbolzen 4 so erzeugt bzw. hervorgerufen, dass die Klemmbolzen 4 gegenüber der Rohrverbindungsebene E jeweils schräg gestellt werden, wie dies in den Fig. 1 und 2 angedeutet ist. Im Rahmen des Beispiels und nicht einschränkend werden Schrägwinkel α für die Schrägstellung des Klemmwerkzeuges 3 gegenüber der Rohrverbindungsebene E von ca. 10° bis 20° beobachtet. Das hängt natürlich von der Ausgestaltung der Klemmbolzen 4 und insbesondere ihrem Abstand B zueinander ab.

Tatsächlich muss nämlich dieser Abstand B der Klemmbolzen 4 untereinander größer ausgebildet sein als der Durchmesser der Rohrabschnitte 1. Denn ansonsten ist es nicht möglich, dass sich die Klemmbolzen 4 überhaupt schräg stellen können. Die Klemmbolzen 4 sind durch beidseitige Tragarme 5 miteinander verbunden. Zusätzlich erkennt man noch Verbindungsbolzen 6 kopfseitig des jeweiligen Klemmwerkzeuges 3, die ebenfalls für eine Kopplung der Tragarme 5 - ergänzend zu den Klemmbolzen 4 - sorgen. Die Klemmbolzen 4 bilden zusammen mit den Tragarmen 5 einen den jeweiligen Rohrabschnitt 1 umschließenden Klemmkäfig 4, 5.

Die Klemmbolzen 4 verfügen über einen Klemmbereich 7, welcher an die Außenkontur des Rohrabschnittes 1 angepasst ist. Tatsächlich verfügt der Klemmbereich 7 über eine aufgeraute Oberfläche und ist im Rahmen des Beispiels doppelkegelstumpfförmig ausgestaltet. Das heißt, der Klemmbereich 7 setzt sich im Wesentlichen aus zwei aus dem Klemmbolzen 4 geformten Kegelstümpfen zusammen, die jeweils an ihren Köpfen aneinander anschließen. Dadurch ist der Klemmbereich 7 jedes Klemmbolzens 4 in der Lage, wenigstens zwei Berührungsflächen 8 mit der Außenoberfläche des jeweiligen Rohrabschnittes 1 zur Verfügung stellen zu können.

Man erkennt, dass die beiden Verbindungsbolzen 6 der jeweiligen Klemmwerkzeuge 3 miteinander gekoppelt sind, und zwar unter Zwischenschaltung einer Antriebseinheit 9. Tatsächlich arbeitet die Antriebseinheit 9 insgesamt auf eine Spindel 10 bzw. zwei beidseitige Spindeln 10, die mit den Verbindungsbolzen 6 in Eingriff stehen. Bei den Spindeln 10 handelt es sich um Gewindespindeln, die im Innengewinde 11 in den Verbindungsbolzen 6 eingreifen. Dabei ist die Auslegung insgesamt so getroffen, dass eine bestimmte Drehrichtung der Spindel 10 dazu korrespondiert, dass die beiden Verbindungsbolzen 6 ihren Abstand zueinander vergrößern, wie dies die Fig. 1 darstellt. In der anderen Drehrichtung der Spindel wird der Abstand der beiden Verbindungsbolzen 6 zueinander jedoch verringert (vgl. Fig. 2).

Weil bei diesem Vorgang jeweils nur die beiden Verbindungsbolzen 6 zueinander bzw. ihr Abstand variiert, führt die entsprechende Beaufschlagung der Antriebseinheit 9 dazu, dass der Klemmkäfig 4, 5 aus den beiden Klemmbolzen 4 und den beidseitigen Tragarmen 5 zunehmend schräg gestellt wird. Dabei korrespondiert eine Vergrößerung des Abstandes der Verbindungsbolzen 6 entsprechend der Darstellung nach Fig. 1 dazu, dass die Tragarme 5 der beiden Klemmwerkzeuge 3 insgesamt zueinander einen spitzen Winkel mit dem Schnittpunkt unterhalb der Rohrabschnitte 1 einnehmen. Als Folge hiervon werden auf die beiden Rohrabschnitte 1 Axialkräfte A ausgeübt, welche die beiden Rohrabschnitte 1 voneinander entfernen, wie dies in der Fig. 1 angedeutet ist.

Wird die Spindel 10 jedoch dergestalt beaufschlagt, dass die Verbindungsbolzen 6 ihren Abstand verringern, so schließen die Tragarme 5 wiederum einen spitzen Winkel zwischen sich ein, wobei nun allerdings der Scheitelpunkt bzw. Schnittpunkt oberhalb der beiden Rohrabschnitte 1 angeordnet ist. Als Folge hiervon werden Axialkräfte A auf die beiden Rohrabschnitte 1 dergestalt ausgeübt, dass diese aufeinander zu in Richtung der Rohrverbindungsebene E bewegt werden. Das deutet die Fig. 2 an. Dadurch lassen sich die Rohrabschnitte 1 problemlos entkoppeln, wie dies in der Fig. 1 dargestellt ist und koppeln entsprechend der Funktionsstellung nach Fig. 2.

Um die Rohrverbindungsvorrichtung bzw. die jeweiligen Klemmwerkzeuge 3 problemlos an dem zu beaufschlagenden Rohrabschnitt 1 festlegen zu können, ist das Klemmwerkzeug 3 insgesamt zerlegbar ausgebildet. In zerlegtem Zustand lässt sich das Klemmwerkzeug 3 an dem zugehörigen Rohrabschnitt 1 anbauen. Das erreicht die Erfindung im Detail dadurch, dass sich zumindest ein Tragarm 5 der beiden Tragarme 5 von den beiden Klemmbolzen 4 und dem Verbindungsbolzen 6 entfernen lässt. Dazu mögen die vorgenannten Bolzen 4, 6 beispielsweise mit einem Sprengring oder dergleichen an dem Tragarm 5 lösbar festgelegt werden. Ebenso liegt es im Rahmen der Erfindung, die Klemmbolzen 4 insgesamt auswechselbar zu gestalten, um Rohrabschnitte 1 unterschiedlichen Durchmessers verarbeiten zu können. Hier ist es beispielsweise denkbar, in den Tragarmen 5 ein Lochraster zu definieren, welches einen unterschiedlichen Abstand B der Klemmbolzen 4 untereinander ermöglicht. Darüber hinaus liegt es natürlich im Rahmen der Erfindung, die axiale Länge der Klemmbolzen 4 zu variieren bzw. mit entsprechend gestaltetem Klemmbolzen 4 und dann natürlich auch Verbindungsbolzen 6 zu arbeiten.

Die Antriebseinheit 9 kann sowohl mechanisch mit Hilfe eines Schraubschlüssels oder einer Ratsche bedient werden als auch elektrisch oder sogar hydraulisch angetrieben werden. Das hängt von den örtlichen Gegebenheiten ab. Meistens wird die Rohrverbindungsvorrichtung im untertägigen Ausbau für die dortigen Rohrleitungen eingesetzt. Das ist selbstverständlich nicht zwingend.

## Patentansprüche

1. Rohrverbindungsvorrichtung zur Kopplung/Entkopplung von insbesondere Hochdruckrohren zur Fluidführung, mit wenigstens zwei zueinander bewegbaren Klemmwerkzeugen (3), **dadurch gekennzeichnet, dass** das jeweilige Klemmwerkzeug (3) mit zwei Klemmbolzen (4) ausgerüstet ist, welche einen Rohrabschnitt (1) unter Keilwirkung zwischen sich aufnehmen.

2. Rohrverbindungsvorrichtung nach Anspruch 1, **dadurch gekennzeichnet, dass** das jeweilige Klemmwerkzeug (3) zerlegbar ausgebildet ist.

3. Rohrverbindungsvorrichtung nach Anspruch 1 oder 2, **dadurch gekennzeichnet, dass** die Klemmbolzen (4) zur Ausübung von Axialkräften (A) auf den Rohrabschnitt (1) unter gleichzeitiger Keilwirkung gegenüber einer Rohrverbindungsebene (E) schräg gestellt werden.

4. Rohrverbindungsvorrichtung nach einem der Ansprüche 1 bis 3, **dadurch gekennzeichnet, dass** die Klemmbolzen (4) durch beidseitige Tragarme (5) miteinander verbunden sind.

5. Rohrverbindungsvorrichtung nach einem der Ansprüche 1 bis 4, **dadurch gekennzeichnet, dass** die Klemmbolzen (4) zusammen mit den Tragarmen (5) einen den Rohrabschnitt (1) umschließenden Klemmkäfig (4, 5) bilden.

6. Rohrverbindungsvorrichtung nach einem der Ansprüche 1 bis 5, **dadurch gekennzeichnet, dass** der jeweilige Klemmbolzen (4) einen an die Kontur des Rohrabschnittes (1) angepassten Klemmbereich (7) aufweist.

7. Rohrverbindungsvorrichtung nach einem der Ansprüche 1 bis 6, **dadurch gekennzeichnet, dass** zur Verstellung der beiden Klemmwerkzeuge (3) zueinander eine Antriebseinheit (9) vorgesehen ist.

8. Rohrverbindungsvorrichtung nach Anspruch 7, **dadurch gekennzeichnet, dass** die Antriebseinheit (9) mechanisch und/oder elektrisch und/oder hydraulisch arbeitet.

9. Rohrverbindungsvorrichtung nach einem der Ansprüche 7 oder 8, **dadurch gekennzeichnet, dass** die Antriebseinheit (9) an den Tragarmen (5) angreift und diese miteinander verbindet.

10. Rohrverbindungsvorrichtung nach einem der Ansprüche 7 bis 9, **dadurch gekennzeichnet, dass** die Antriebseinheit (9) auf zwei die Tragarme (5) jeweils miteinander koppelnde Verbindungsbolzen (6) arbeitet.
